# EUROPÄISCHE PATENTSCHRIFT

(11) **EP 0 492 151 B1**
(45) Veröffentlichungstag und Bekanntmachung des Hinweises auf die Patenterteilung: **23.08.1995**
(21) Anmeldenummer: 91120121.8
(22) Anmeldetag: 26.11.1991
(51) Int. Cl.: B60B 33/00, B60B 33/02, B60R 16/06

(54) **Lenkrolle**
Castor
Roulette à pivot

(30) Priorität: 22.12.1990 DE 4041512
(43) Veröffentlichungstag der Anmeldung: 01.07.1992
(73) Patentinhaber: Rhombus Rollen GmbH & Co., 42929 Wermelskirchen (DE)
(72) Erfinder: Lange, Hans-Willi, W-5632 Wermelskirchen 1 (DE)
(74) Vertreter: Mentzel, Norbert, Dipl.-Phys.

(56) Entgegenhaltungen:
- EP-A- 0 290 160
- EP-A- 0 382 584
- DE-A- 3 837 824
- US-A- 2 267 503

## Beschreibung

Die Erfindung betrifft eine Lenkrolle mit einer Vorrichtung zum Feststellen einerseits der Schwenkbewegung der insbesondere aus Kunststoff gebildeten Radgabel und andererseits der Drehbewegung des in der Radgabel gelagerten Laufrades, die einen im Befestigungszapfen des Schwenklagers axial verschiebbar und unverdrehbar gegen die Kraft eines Rückstellgliedes geführten und mittels einer Schalteinrichtung betätigbaren Feststellbolzen aufweist, der an einer in der Radgabelhöhlung gelagerten, an das Laufrad anpreßbaren Bremsschwinge angreift.

Bei einer aus der DE-A-3 837 824 bekannten Lenkrolle der eingangs genannten Art bestehen vor allem das Laufrad und die Radgabel aus einem Kunststoff, wodurch eine ansprechende Gestaltung der gesamten Lenkrolle möglich wird. Derartige Lenkrollen lassen sich insbesondere an verfahrbaren Gegenständen, wie insbesondere Krankenbetten, einsetzen, so daß derartige Lenkrollen vor allem in Gebäudeinnenräumen betrieben werden. Der in Gebäuden vielfach als Kunststoffbelag verwendete Fußboden und das aus isolierendem Kunststoff hergestellte Laufrad und die Radgabel führen zu einer statischen Aufladung, die insbesondere bei Krankenbetten unerwünscht ist und auch negativ auf am Krankenbett eingesetzte, elektrische Behandlungs- und Diagnosegeräte einwirken kann.

Aus der Druckschrift EP-A-0 290 160 ist eine Möbelrolle ersichtlich, deren Zwillingsräder eine stromleitende Bandage aufweisen, die über ein stromleitendes Federglied mit dem Befestigungszapfen aus Stahl in Berührung ist. Dabei weist das Federglied einen an der Bandage schleifenden Finger und einen weiteren, am Befestigungszapfen schleifenden Finger auf. Dieses stromleitende Federglied stützt sich einerseits auf der Rollenachse und andererseits mit dem Schleiffinger in einer Bohrung des Aufnahmegehäuses für den Zapfen verdrehsicher ab. Das stromführende Federglied bildet somit einen einheitlichen, einstückigen Bauteil. Es ist zu bezweifeln, ob eine derartige Lösung auf lage Sicht völlig störunanfällig bleibt. Denn durch die äußere Führung einer stromverbindenden Leitung zwischen der Rollenbandage und der Achse einerseits sowie zwischen der Achse und dem Befestigungszapfen andererseits kann nicht ausgeschlossen werden, daß sich zwischen die Rolle und das Gehäuse Fäden aus einer textilen Teppichoberfläche einziehen, die möglicherweise zwischen die Kontaktflächen der Kontaktfeder geraten und somit die Stromleitung zwischen der Bandage der Rolle und dem Befestigungszapfen unterbrechen.

Die Aufgabe der vorliegenden Erfindung besteht darin, eine mit einer Bremseinrichtung versehene Lenkrolle der eingangs genannten Art derart zu verbessern, daß eine Ableitung von Stromladungen aus dem verfahrbaren Gerät über eine Rolle in den Boden möglich ist, ohne daß Verschmutzungen die Stromleitung unterbrechen. Diese Aufgabe ist erfindungsgemäß dadurch gelöst, daß die aus stromleitendem Werkstoff gebildete Lauffläche des Laufrades mit dem Befestigungszapfen über eine aus mehreren Abschnitten bestehende, stromführende Leitung verbunden ist, welche die Lauffläche des Laufrades mit dem Feststellbolzen aus metallischem, stromleitendem Werkstoff verbinden, wobei die Felge und Nabe verbindende Stützscheibe des Laufrades eine sich in radialer Richtung erstreckende Leitung aufweist, die den stromleitenden Felgenmantel mit dem in der Nabe befindlichen Wälzlager verbindet.

Da der Befestigungszapfen selbst in üblicher Weise aus Metall besteht und stromleitend ist, läßt sich über den Befestigungszapfen ein stromführender Kontakt zu der den Befestigungszapfen umfassenden Aufnahmebohrung des Gerätes herstellen. Die nichtleitenden Kunststoffbauteile werden durch die stromführende Leitung der Lenkrolle selbst überbrückt. Auf diese Weise ist die statische Aufladung des Gerätes - bei dem es sich beispielsweise um ein Krankenbett handeln kann - verhindert. Da der Feststellbolzen in dem ebenfalls aus metallischem Werkstoff bestehenden Befestigungszapfen geführt ist, und somit ein Kontakt zwischen dem Befestigungszapfen und dem Feststellbolzen besteht, ist eine Stromführung vom Befestigungszapfen bis zum Boden, auf welchem die Lenkrolle aufsteht, selbst dann gegeben, wenn verschiedene Bauteile der Lenkrolle aus einem isolierenden Kunststoff bestehen.

Einer dieser Leitungsabschnitte wird dadurch gebildet, daß die Leitung in der Stützscheibe zwischen Felge und Nabe des Laufrades durch sich in einen radialen Kanal zwischen Nabe und Felgenmantel fortsetzenden, stromleitenden Werkstoff des Felgenmantels gebildet ist. Als Felgenmantelwerkstoff wird vorteilhaft eine Gummimischung mit elektrisch leitenden Partikeln eingesetzt.

Ein weiterer Leitungsabschnitt läßt sich bilden, indem das das Laufrad tragende Wälzlager aus einem Kugellager besteht, dessen Innenring auf Achshülsen aus stromleitendem Werkstoff festgelegt ist, die durch eine an den Schenkeln der Radgabel festgelegte Achsschraube miteinander verbunden sind. Zur weiteren stromführenden Überbrückung durch einen weiteren Leitungsabschnitt weist wenigstens ein Radgabelschenkel auf seiner Innenseite eine sich von der Achsschraube etwa zum Radgabelrücken erstreckenden Nut auf, in welcher ein die Achshülsen mit der Bremsschwinge bzw. deren Stützglied verbindender Leitungsdraht angeordnet ist. Da die Bremsschwinge selbst, insbesondere aus statischen Gründen, aus Metall besteht, ist deren Leitfähigkeit gegeben. Im Feststellfall der Lenkrolle ist die Bremsschwinge in unmittelbarem Kontakt mit dem im Befestigungszapfen geführten Feststellbolzen. Damit aber auch bei den anderen Stellagen des Feststellbolzens und insbesondere der die Schwenkbewegung der Radgabel als auch die Drehbewegung des Laufrades ermöglichenden Lage die Stromführung nicht unterbrochen wird, ist ein weiterer Leitungsabschnitt dadurch gebildet, daß die Bremsschwinge über eine elektrisch leitende Kontaktfeder mit dem metallischen Feststellbolzen in stetiger Verbindung ist.

Zur sicheren Kontaktierung einerseits und aus fertigungstechnischen Gründen andererseits geht der zwischen Felgenmantel und Wälzlager verlaufende Kanal vorteilhaft in eine die Nabe in axialer Richtung durchquerende, den Außenring des Wälzlagers tangierende Ausnehmung über, die ebenso wie der Kanal mit stromleitendem Werkstoff des Felgenmantels gefüllt ist. Diese quer zum Kanal verlaufende Ausnehmung dient während der Füllung des Kanales mit dem stromleitenden Felgenmantelwerkstoff auch zu dessen Entlüftung.

Um einen sicheren Kontakt mit dem Leitungsdraht im Bereich der Achse herstellen zu können, ist an den Leitungsdraht vorteilhaft im Bereich der Achse ein Federhaken zur kontaktgebenden Verklemmung mit der Achsschraube angeformt.

Die Erfindung ist in einem Ausführungsbeispiel auf der Zeichnung dargestellt und wird nachfolgend näher erläutert. Es zeigen:
- Fig. 1: die Lenkrolle in einer aufgebrochenen Schnittansicht von der Seite gesehen,

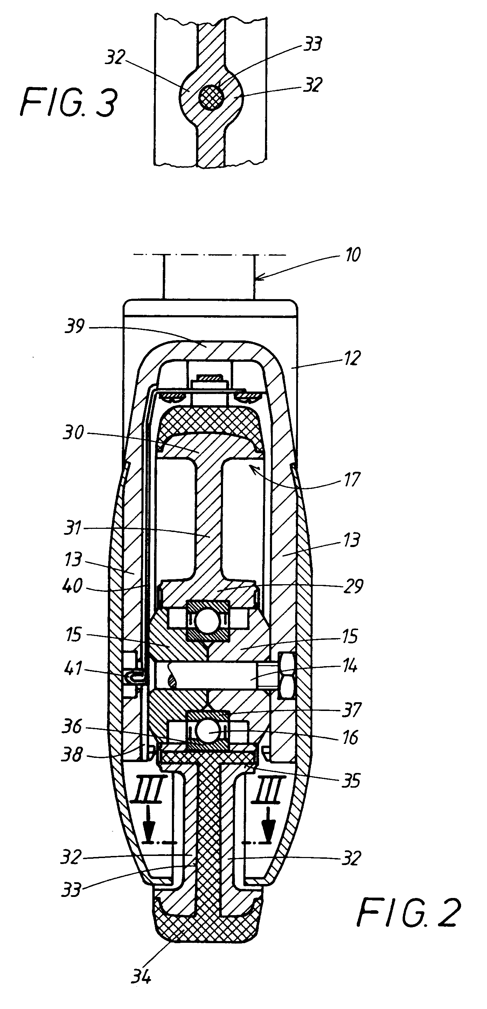

- Fig. 2: die aus Fig. 1 ersichtliche Lenkrolle in einem Querschnitt nach der Linie II - II von Fig. 1,
- Fig. 3: das den stromführenden Kanal aufweisende Laufrad in einem Querschnitt nach der Linie III - III von Fig. 2.

Die Lenkrolle umfaßt einen beispielsweise in einem rohrförmigen Gerätefuß durch eine Schraube festgelegten Befestigungszapfen 10, an dessen Unterende beispielsweise ein Kugellager zur Bildung eines Schwenklagers 11 für die Radgabel 12 angeordnet ist. In den Radgabelschenkeln 13 ist in üblicher Weise mittels einer Achsschraube 14 eine aus zwei Achshülsen 15 gebildete Laufradachse festgelegt, auf welcher über ein als Kugellager ausgebildetes Wälzlager 16 das Laufrad 17 gelagert ist.

Im Befestigungszapfen 10 ist ein Feststellbolzen 18 axial verschiebbar, jedoch infolge eines bereichsweise unrunden Querschnitts, unverdrehbar angeordnet und weist an seinem in die Radgabelhöhlung einragenden Ende eine Tellerscheibe 19 auf, die an ihrer Oberseite mit zwei einander diametral gegenüberliegenden Rippen 20 zur Erzielung einer Richtungsfeststellung für den Geradeauslauf der Lenkrolle in zwei entsprechende Schlitze einer unter dem Radgabelrücken festgelegten Scheibe 21 bedarfsweise eingreifen kann. Die Unterseite der Tellerscheibe 19 ist mit einer Verzahnung versehen, welche in ein Zahnsegment der Bremsschwinge 22 eingreifen kann.

Während der Grundkörper des Laufrades 17 und die Radgabel 12 aus einem nichtleitenden Kunststoff gebildet sind, besteht die Bremsschwinge 22 aus einem metallischen Formteil, das mit einem Lagerzapfen 23 einstückig verbunden ist, der in eine an der Innenseite des Gabelrückens offene Lageraufnahme eingreift und in dieser durch ein an der Innenseite des Gabelrückens festgelegtes, als Federplatte ausgebildetes Stützglied 24 drehbeweglich gehalten ist. Dabei ist das Stützglied an der Unterseite des Radgabelrückens mittels Schrauben 25 festgelegt.

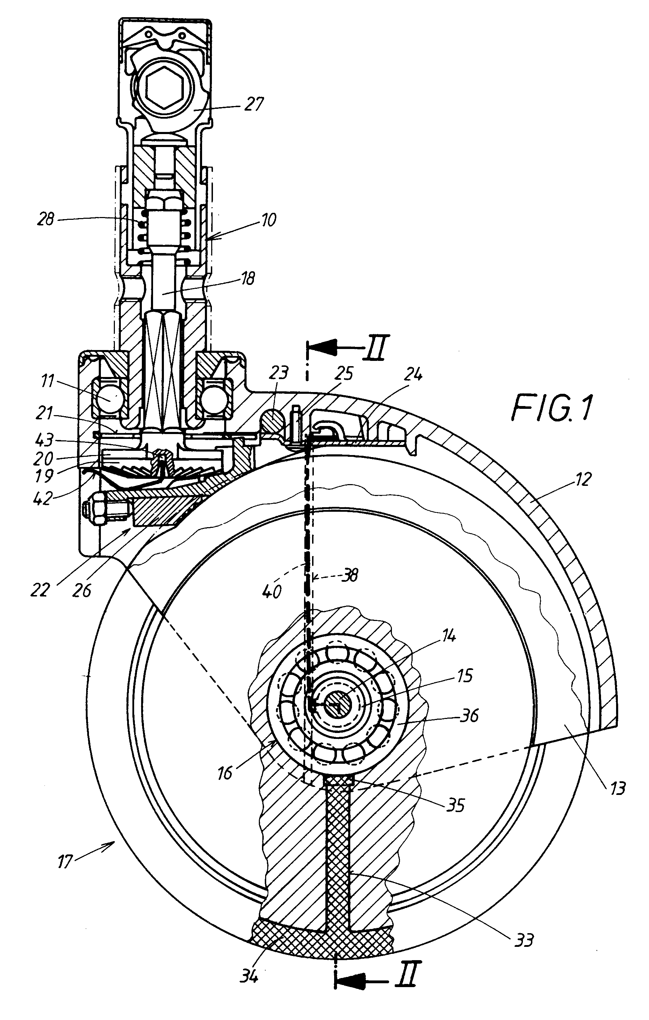

Der Bremsarm der Bremsschwinge 22 weist einen nachstellbaren Bremsklotz 26 auf, welcher im Feststellfall am Umfang des Laufrades 17 angreift. Bei dem dargestellten Ausführungsbeispiel ist eine mechanische Schalteinrichtung zur Betätigung des Feststellbolzens 18 vorgesehen, obschon die Feststellung auch auf hydraulischem, pneumatischem oder auch auf elektromechanischem Wege erfolgen könnte. Hier befindet sich jedoch oberhalb des Feststellbolzens 18 ein in einem Fortsatz des Befestigungszapfens 10 gelagerter Stellnocken 27, der in bekannter Weise drei in unterschiedlicher Höhenlage angeordnete Stellflächen aufweist. Auf diese Weise ist die aus Fig. 1 ersichtliche Totalblockierung sowohl der Schwenkbewegung der Radgabel als auch der Drehbewegung des Laufrades sowie eine völlige Freigabe dieser Bewegungen, und schließlich nur die Festlegung der Schwenkbewegung der Radgabel möglich. Dabei ist der Feststellbolzen 18 von einer Rückstellfeder 28 derart beaufschlagt, daß der Kopf des Feststellbolzens 18 stets in Anlage am Stellnocken 27 verbleibt und die Tellerscheibe 19 dementsprechend unterschiedliche Höhenlagen einnimmt.

Die Nabe 29 des Laufrades 17 ist mit dessen Felge 30 über eine Stützscheibe 31 einstückig verbunden, wozu als Werkstoff, genau wie bei der Radgabel 12, ein isolierender Kunststoff eingesetzt ist. An einer Stelle ist die Stützscheibe 31 zwischen der Nabe und der Felge beiderseits in radialer Richtung durch Wulste 32 verdickt, so daß sich ein von der Außenseite der Felge bis zur Nabe erstreckender Kanal 33 bilden läßt. Die Felge 30 ist auf ihrer Außenseite mit einem Felgenmantel 34 überzogen, der beispielsweise aus einer Gummimischung mit elektrisch leitenden Partikeln bestehen kann. Diese Gummimischung füllt auch den Kanal 33 und erstreckt sich auch in eine den Kanal 33 anschneidende, die Nabe in axialer Richtung durchquerende Ausnehmung 35, die den in der Nabe 29 durch Umspritzen festgelegten Außenring 36 des Wälzlagers 16 tangiert. Der Innenring 37 des Wälzlagers ist mittels der Achsschraube 14 zwischen die Achshülsen 15 geklemmt.

Einer der beiden Radgabelschenkel 13 weist auf seiner Innenseite eine Nut 38 auf, die sich vom Achsbereich bis etwa zum Radgabelrücken 39 hin erstreckt. Diese Nut 38 nimmt einen Leitungsdraht 40 auf, der oberendig an dem mit dem Lagerzapfen 23 in Kontakt befindlichen, metallischen Stützglied 24 verklemmt ist. An seinem Unterende weist der Leitungsdraht 40 einen Federhaken 41 auf, der mit dem nicht dargestellten Kopf der Achsschraube 14 kontaktgebend verklemmt ist.

Um auch bei Freigabestellung des Feststellbolzens 18 und dabei in eine berührungsfreie Lage geschwenkter Bremsschwinge 22 eine Stromüberleitung von der Bremsschwinge auf den Feststellbolzen zu gewährleisten, ist zwischen dem Rücken der Bremsschwinge 22 und der Tellerscheibe 19 des Feststellbolzens eine elektrisch leitende Kontaktfeder 42 angeordnet, die einerseits mit einem abgewinkelten Ende in eine Zentralbohrung 43 der Tellerscheibe 19 faßt, an der Oberseite der Bremsschwinge 22 in Anlage bleibt und andererseits zu ihrer Verdrehsicherung in einen die Nachstellung des Bremsklotzes 26 ermöglichenden Schlitz der Radgabel 12 greift.

Damit wird zwischen der Lauffläche des Laufrades 17 und dem Befestigungszapfen 10 eine stromführende Leitung ermöglicht, die aus dem mit Felgenmantelwerkstoff gefüllten Kanal 33, der Ausnehmung 35, dem Wälzlager 16, den Achshülsen 15 mit der Achsschraube 14, dem Leitungsdraht 40, dem Stützglied 24 mit der Bremsschwinge 22, der Kontaktfeder 42 und dem Feststellbolzen 18 besteht. Diese stromführende Leitung läßt sich grob in etwa drei Abschnitte zur Überbrückung von nichtleitenden Kunststoffen bzw. Luftspalten unterteilen, wobei der erste Abschnitt im wesentlichen aus dem den Felgenmantelwerkstoff aufnehmenden Kanal 33, der zweite Abschnitt im wesentlichen aus dem Leitungsdraht 40 und der dritte Abschnitt hauptsächlich aus der Kontaktfeder 42 gebildet ist. Auf diese Weise ist in jedem Fall das Abfließen eines durch statische Aufladung gebildeten Stromes vom Befestigungszapfen 10 über die Lauffläche des Laufrades 17 in den Boden und umgekehrt gewährleistet, unabhängig davon, ob die Feststellvorrichtung aktiviert ist oder nicht.

Wie bereits erwähnt, gibt die vorbeschriebene Ausführungsform die Erfindung lediglich beispielsweise wieder, die keinesfalls allein darauf beschränkt ist. Es sind vielmehr noch mancherlei Änderungen und andere Ausgestaltungen der Erfindung denkbar. So könnte beispielsweise statt des in eine Nut eingelegten Drahtes auch eine stromführende Beschichtung sowohl der Radgabelschenkel als auch des Radgabelrückens zur Überbrückung der Isolierstelle zwischen Bremsschwinge und Feststellbolzen gewählt werden. In diesem Fall wäre es denkbar, eine zwischen dem Schwenklager 11 und dem Lagerzapfen 23 verlaufende Nut im Gabelrücken mit einer stromleitenden Substanz auszufüllen.

## Patentansprüche

1. Lenkrolle mit einer Vorrichtung zum Feststellen einerseits der Schwenkbewegung der aus Kunststoff gebildeten Radgabel (12) und andererseits der Drehbewegung des in der Radgabel (12) gelagerten Laufrades (17), die einen im Befestigungszapfen (10) des Schwenklagers (11) axial verschiebbar und unverdrehbar gegen die Kraft eines Rückstellfedergliedes (28) geführten und mittels einer Schalteinrichtung betätigbaren Feststellbolzen (18) aufweist, der an einer in der Radgabelhöhlung gelagerten, an das Laufrad (17) anpreßbaren Bremsschwinge (22) angreift,
**dadurch gekennzeichnet,**
daß die aus stromleitendem Werkstoff gebildete Lauffläche des Laufrades (17) mit dem Befestigungszapfen (10) über eine aus mehreren Abschnitten (33, 40, 43) bestehende, stromführende Leitung (33, 35, 14, 15, 16, 22, 24, 40, 10, 18, 42) verbunden ist, welche die Lauffläche des Laufrades (17) mit dem Feststellbolzen (10) aus metallischem, stromleitendem Werkstoff verbinden, wobei die Felge (30) und Nabe (29) verbindende Stützscheibe (31) des Laufrades (17) eine sich in radialer Richtung erstreckende Leitung (33) aufweist, die den stromleitenden Felgenmantel (34) mit dem in der Nabe (29) befindlichen Wälzlager (16) verbindet.

2. Lenkrolle nach Anspruch 1, dadurch gekennzeichnet, daß die Leitung (33) durch sich in einen radialen Kanal zwischen Nabe (29) und Felgenmantel (34) fortsetzenden stromleitenden Werkstoff des Felgenmantels (34) gebildet ist.

3. Lenkrolle nach einem oder mehreren der vorhergehenden Ansprüche, dadurch gekennzeichnet, daß das das Laufrad (17) tragende Wälzlager (16) aus einem Kugellager besteht, dessen Innenring (37) auf Achshülsen (15) aus stromleitendem Werkstoff festgelegt ist, die durch eine an den Schenkeln (13) der Radgabei (12) festgelegte Achsschraube (14) miteinander verbunden sind.

4. Lenkrolle nach einem oder mehreren der vorhergehenden Ansprüche, dadurch gekennzeichnet, daß wenigstens ein Radgabelschenkel (13) auf seiner Innenseite eine sich von der Achsschraube (14) bis etwa zum Radgabelrücken (39) erstreckende Nut (38) aufweist, in welcher ein die Achse (14,15) mit der Bremsschwinge (22) bzw. deren Stützglied (24) verbindender Leitungsdraht (40) angeordnet ist.

5. Lenkrolle nach einem oder mehreren der vorhergehenden Ansprüche, dadurch gekennzeichnet, daß die Bremsschwinge (22) über eine elektrisch leitende Kontaktfeder (42) mit dem metallischen Feststellbolzen (18) in stetiger Verbindung ist.

6. Lenkrolle nach Anspruch 2, dadurch gekennzeichnet, daß der zwischen Felgenmantel (34) und Wälzlager (16) verlaufende Kanal (33) in eine die Nabe (29) in axialer Richtung durchquerende, den Außenring (36) des Wälzlagers (16) tangierende Ausnehmung (35) übergeht, die ebenso wie der Kanal (33) mit stromleitendem Werkstoff des Felgenmantels (34) gefüllt ist.

7. Lenkrolle nach Anspruch 2 und/oder 6, dadurch gekennzeichnet, daß als Felgenmantelwerkstoff eine Gummimischung mit elektrisch leitenden Partikeln eingesetzt ist.

8. Lenkrolle nach Anspruch 4, dadurch gekennzeichnet, daß an den Leitungsdraht (40) im Bereich der Achse ein Federhaken (41) zur kontaktgebenden Verklemmung mit der Achsschraube (14) angeformt ist.

## Claims

1. A castor having a device for arresting on the one hand the pivotal movement of the wheel fork (12) which is formed from plastics material and on the other hand the rotary movement of the wheel (17) which is mounted in the wheel fork (12), which device has an arresting pin (18) which is guided in the fixing trunnion (10) of the pivot bearing (11) axially displaceably and non-rotatably against the force of a return spring member (28) and which can be actuated by means of an actuator device and which engages a brake rocker member (22) which is mounted in the hollow of the wheel fork and can be pressed against the wheel (17), characterised in that the running surface of the wheel (17), which surface is formed from current-conducting material, is connected to the fixing trunnion (10) by way of a current-carrying line (33, 35, 14, 15, 16, 22, 24, 40, 10, 18, 42) which comprises a plurality of portions (33, 40, 43) and which connect the running surface of the wheel (17) to the arresting pin (18) of metal, current-conducting material, wherein the support disc portion (31) of the wheel (17), which connects the rim (30) and the hub (29), has a line (33) which extends in the radial direction and which connects the current-conducting rim cover (34) to the rolling bearing (16) disposed in the hub (29).

2. A castor according to claim 1 characterised in that the line (33) is formed by current-conducting material of the rim cover (34), which current-conducting material is continued into a radial passage between the hub (29) and the rim cover (34).

3. A castor according to one or more of the preceding claims characterised in that the rolling bearing (16) which carries the wheel (17) comprises a ball bearing whose inner race (37) is fixed on axle sleeves (15) of current-conducting material, which are connected together by an axle screw (14) which is fixed to the limbs (13) of the wheel fork (12).

4. A castor according to one or more of the preceding claims characterised in that at least one wheel fork limb (13) has on its inward side a groove (38) which extends from the axle screw (14) approximately to the back (39) of the wheel fork and in which there is arranged a line wire (40) which connects the axle (14, 15) to the brake rocker member (22) or the support member (24) thereof.

5. A castor according to one or more of the preceding claims characterised in that the brake rocker member (22) is constantly connected to the metal arresting pin (18) by way of an electrically conductive contact spring (42).

6. A castor according to claim 2 characterised in that the passage (33) which extends between the rim cover (34) and the rolling bearing (16) goes into an opening (35) which passes through the hub (29) in the axial direction and which touches on the outer race (36) of the rolling bearing (16) and which like the passage (33) is filled with current-conducting material of the rim cover (34).

7. A castor according to claim 2 and/or 6 characterised in that a rubber blend with electrically conductive particles is used as the rim cover material.

8. A castor according to claim 4 characterised in that a spring hook (41) is formed on the line wire (40) in the region of the axis for contact-making clamping to the axle screw (14).

## Revendications

1. Roulette orientable, avec un dispositif pour bloquer, d'une part, le mouvement de pivotement de la fourche de roue (12) réalisée en matière plastique et, d'autre part, le mouvement de rotation de la roue de roulement (17) montée à rotation dans la fourche de roue (12), présentant un boulon de blocage (18) déplaçable axialement dans le tourillon de fixation (10) du palier de pivotement (11), guidée en étant bloqué en rotation à l'encontre de la force d'un organe élastique de rappel (28) et susceptible d'être actionné au moyen d'un organe de commutation, le boulon de blocage agissant sur une coulisse de freinage, montée dans la cavité de fourche de roue et susceptible d'être pressée sur la roue de roulement (17), caractérisée en ce que la surface de roulement de la roue de roulement (17), réalisée en un matériau conducteur de l'électricité, est reliée au tourillon de fixation (10) par l'intermédiaire d'une ligne (33, 35, 14, 15, 16, 22, 24, 40, 10, 18, 42) guidant le courant électrique, constituée de plusieurs tronçons (33, 40, 43), qui relie la surface de roulement de la roue de roulement (17) au boulon de fixation (10) réalisé en un matériau métallique conducteur de l'électricité, le disque d'appui (31) reliant la jante (30) et le moyeu (29) de la roue de roulement (17) présentant une ligne ou un conducteur (33) s'étendant en direction radiale et reliant l'enveloppe de jante (34) conductrice de l'électricité au palier à roulement (16) se trouvant dans le moyeu (29).

2. Roulette orientable selon la revendication 1, caractérisée en ce que la ligne (33) est constituée par le matériau de l'enveloppe de jante, qui est conducteur de l'électricité et qui se prolonge en un canal radial entre le moyeu (29) et l'enveloppe de jante (34).

3. Roulette orientable selon l'une ou plusieurs des revendications précédentes, caractérisée en ce que le palier à roulement (16) portant la roue de roulement (17) est constitué d'un roulement à billes, dont la bague intérieure (37) est fixée sur des douilles axiales (15) réalisées en un matériau conducteur de l'électricité et reliées ensemble au moyen d'une vis d'axe (14) fixée sur des branches (13) de la fourche de roue (12).

4. Roulette orientable selon l'une ou plusieurs des revendications précédentes, caractérisée en ce qu'au moins une branche de fourche de roue (13) présente, sur sa face intérieure, une rainure (38), s'étendant de la vis d'axe (14) jusqu'aux environs du dos de la fourche de roue (39), et dans laquelle est disposé un fil conducteur (40) reliant l'axe (14, 15) à la coulisse de freinage (22), ou à son organe d'appui (24).

5. Roulette orientable selon l'une ou plusieurs des revendications précédentes, caractérisée en ce que la coulisse de freinage (22) est en relation permanente avec le boulon de blocage (18) métallique, par l'intermédiaire d'un ressort de contact (42) conducteur de l'électricité.

6. Roulette orientable selon la revendication 2, caractérisée en ce que le canal (33) s'étendant entre l'enveloppe de jante (34) et le palier à roulement (16) se prolonge par un évidement (35) qui traverse le moyeu (29) en direction axiale et vient tangenter la bague extérieure (36) du palier à roulement (16) et est rempli, tout comme le canal (33), du matériau conducteur de l'électricité de l'enveloppe de jante (34).

7. Roulette orientable selon la revendication 2 et/ou 6, caractérisée en ce qu'est utilisé comme matériau de l'enveloppe de jante un mélange élastomère comportant des particules conductrices de l'électricité.

8. Roulette orientable selon la revendication 4, caractérisée en ce qu'un crochet élastique (41), destiné à assurer un serrage assurant un contact avec la vis d'axe (14), est formé sur le fil conducteur (40) dans la zone de l'axe.
